# DEMANDE DE BREVET EUROPEEN

(11) **EP 1 190 935 A1**
(43) Date de publication de la demande: **27.03.2002**
(21) Numéro de dépôt: 01402434.3
(22) Date de dépôt: 21.09.2001
(51) Int. Cl.: B62D 1/10, B62D 1/04

(54) **Ensemble de direction à coussin central fixe, coussin central et véhicule automobile correspondants**

(30) Priorité: 22.09.2000 FR 0012118
(71) Demandeur: Faurecia Industries, 92100 Boulogne-Billancourt (FR)
(72) Inventeur: Baume, Hugues, 25200 Montbeliard (FR); Bois, Frédéric, 25200 Montbeliard (FR); Prevost, Thomas, 91190 Gif sur Yvette (FR)
(74) Mandataire: Jacobson, Claude

(57) **Abrégé**

Cet ensemble de direction pour véhicule automobile comprend un arbre de direction, un volant de direction (3) et un coussin central fixe (4). Le coussin comporte au moins un bouton (50, 51) de commande d'un équipement du véhicule. Le bouton est mobile par basculement dans un premier sens (60, 65) vers une première position active de commande et dans un deuxième sens (61, 66) vers une deuxième position active de commande. Le coussin comprend une saillie radiale (35) sur au moins un de ses côtés latéraux dans laquelle le bouton affleure. La saillie est suffisamment éloignée d'une enveloppe géométrique de révolution définie par rotation des branches (7) du volant et contenant la jante (5) du volant pour permettre au bouton, dans l'une quelconque de ses positions, d'être poussé dans le premier sens (60, 65) par le pouce d'une main d'un conducteur saisissant un tronçon de la jante et poussé dans le deuxième sens (61, 66) par l'index et/ou le majeur de la même main saisissant le même tronçon de la jante.

## Description

La présente invention concerne un ensemble de direction pour véhicule automobile, du type comprenant :
- une colonne de direction comprenant un arbre de direction susceptible de tourner autour d'un axe longitudinal,
- un volant de direction comprenant une jante extérieure et au moins une branche reliée par une première extrémité à la jante et par une deuxième extrémité à l'extrémité arrière de l'arbre de direction pour l'entraîner en rotation autour de son axe longitudinal,
- un coussin central fixe, placé sensiblement au centre du volant à l'arrière de la deuxième extrémité de la ou de chaque branche et relié à l'extrémité arrière de la colonne pour être fixe en rotation lorsque l'arbre de direction tourne, le coussin comportant au moins un bouton de commande d'un équipement du véhicule, le bouton étant affleurant dans le cousin central et mobile par basculement entre une position de repos et au moins une position active de commande.

Généralement, dans un véhicule automobile comprenant un ensemble du type précité, une coquille d'habillage ou gaine recouvre l'extrémité arrière de la colonne de direction pour la masquer. Cette gaine s'étend vers l'avant jusqu'à la planche de bord à laquelle elle est reliée. Cette gaine est surmontée du combiné qui regroupe sur un même support différents cadrans, voyants et indicateurs des appareils de contrôle placés à bord du véhicule.

On connaît un ensemble de direction du type précité dans lequel le coussin central fixe a une forme de calotte sphérique qui est tronquée sur son côté supérieur et qui est munie sur ses côtés latéraux de boutons basculants, déplaçables par poussée vers l'avant pour commander différents organes fonctionnels du véhicule.

La face avant plane du coussin central épouse sensiblement le profil des branches du volant de direction. La face arrière de la gaine épouse également sensiblement le profil des branches du volant de direction et elle est bordée de boutons basculants de commande. Ces boutons sont affleurants et peuvent être déplacés par traction vers l'arrière pour commander des équipements fonctionnels du véhicule.

La gaine comporte en outre en avant de ces boutons de commande affleurants, des leviers de commande classiques, généralement appelés COMMODOS (marque déposée), pour commander les blocs optiques et les feux clignotants du véhicule qui servent à signaler un changement de direction du véhicule.

La présence de tels boutons et leviers de commande sur la gaine empêche, à longueur de gaine constante, un montage satisfaisant de manettes de commande séquentielle de la boîte de vitesses. Par ailleurs, une augmentation de la longueur de la gaine pour monter de telles manettes impliquerait une diminution du volume intérieur de l'habitacle du véhicule, ce qui n'est pas souhaitable.

Un but de l'invention est de résoudre ce problème en fournissant un ensemble du type précité qui permet de monter, sur une gaine de masquage de l'extrémité arrière de la colonne de direction, des manettes de commande séquentielle d'une boîte de vitesses sans augmenter la longueur de la gaine.

A cet effet, l'invention a pour objet un ensemble de direction du type précité, caractérisé en ce que le bouton est mobile par basculement dans un premier sens de sa position de repos vers une première position active de commande et, dans un deuxième sens opposé au premier sens, de sa position de repos vers une deuxième position active de commande, en ce que le coussin comprend une saillie radiale sur au moins un de ses côtés latéraux, dans laquelle le bouton affleure, laquelle saillie est suffisamment éloignée d'une enveloppe géométrique de révolution définie par rotation de la ou de chaque branche autour de l'axe longitudinal et contenant la jante pour permettre au bouton, dans l'une quelconque de ses positions, d'être poussé dans le premier sens par le pouce d'une main d'un conducteur saisissant un tronçon de la jante et poussé dans le deuxième sens par l'index et/ou le majeur de la même main saisissant le même tronçon de la jante.

Selon des modes particuliers de réalisation, l'ensemble peut comprendre l'une ou plusieurs des caractéristiques suivantes, prise(s) isolément ou selon toutes les combinaisons techniquement possibles :
- le bouton est mobile par basculement autour d'un axe sensiblement parallèle à l'axe longitudinal,
- la saillie radiale présente au moins une extrémité supérieure libre et en ce que le bouton est prévu à cette extrémité,
- le bouton est mobile par basculement autour d'un axe sensiblement perpendiculaire à l'axe longitudinal,
- la distance minimale séparant la saillie radiale de ladite enveloppe géométrique est supérieure à environ 2 cm.

L'invention a également pour objet un coussin central fixe pour un ensemble tel que défini ci-dessus, caractérisé en ce qu'il comprend une saillie radiale sur au moins un de ses côtés latéraux dans laquelle au moins un bouton de commande d'un équipement du véhicule affleure, lequel bouton est mobile par basculement dans un premier sens d'une positon de repos vers une première position active de commande et, dans un deuxième sens opposé au premier sens, de sa position de repos vers une deuxième position active de commande.

Selon des modes particuliers de réalisation, le coussin peut comprendre l'une ou plusieurs des caractéristiques suivantes, prise(s) isolément ou selon toutes les combinaisons techniquement possibles :
- le bouton est mobile par basculement autour d'un axe destiné à être sensiblement parallèle à l'axe longitudinal de l'arbre de direction,
- la saillie radiale présente une extrémité libre destinée à être orientée vers le haut et en ce que le bouton est prévu à cette extrémité,
- le bouton est mobile par basculement autour d'un axe destiné à être sensiblement perpendiculaire à l'axe longitudinal de l'arbre de direction.

L'invention a en outre pour objet un véhicule automobile, caractérisé en ce qu'il comprend un ensemble de direction tel que défini ci-dessus.

L'invention sera mieux comprise à la lecture de la-description qui va suivre, donnée uniquement à titre d'exemple et faite en se référant aux dessins annexés, sur lesquels :
- la figure 1 est une vue schématique, partielle et en perspective de l'habitacle d'un véhicule automobile selon l'invention, illustrant l'extrémité arrière de l'ensemble de direction équipant ce véhicule,
- la figure 2 est une vue partielle, latérale, schématique, à échelle plus réduite, et partiellement en coupe illustrant l'ensemble de direction de la figure 1, et
- les figures 3 et 4 sont des vues schématiques, partielles, agrandies et en perspective illustrant le volant et le coussin central de l'ensemble de direction de la figure 1.

Dans tout ce qui suit les orientations utilisées sont les orientations habituelles d'un véhicule automobile. En particulier, les termes " avant " et " arrière " s'entendent par rapport à la position d'un conducteur.

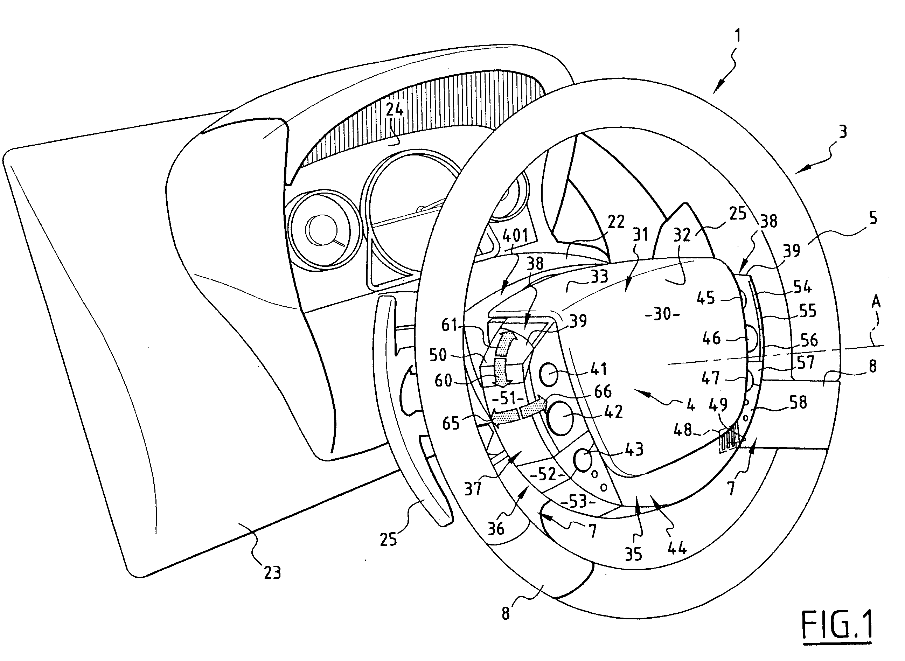

La figure 1 représente un véhicule automobile équipé d'un ensemble de direction 1.

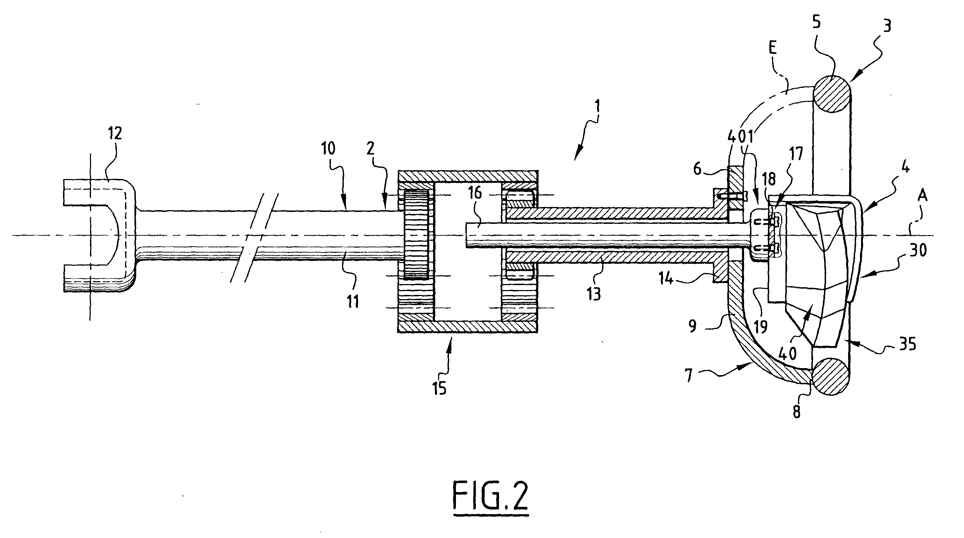

Comme on le voit sur la figure 2, cet ensemble de direction 1 comprend une colonne de direction 2 s'étendant selon un axe longitudinal A, un volant de direction 3 et un cousin central 4. Le volant de direction 3 et le coussin central 4 sont montés à l'arrière de la colonne de direction 2.

Le volant 3 comprend une jante annulaire extérieure 5, un moyeu central 6 et des branches 7 reliée chacune par une première extrémité 8 à la jante 5 et par une deuxième extrémité 9 au moyeu 6. Dans l'exemple représenté, les branches 7 sont au nombre de deux. Il est à noter que la position angulaire du volant 3 est différente entre la figure 1 et la figure 2.

La colonne de direction 2 comprend un arbre de direction 10 rotatif autour de l'axe longitudinal A. L'arbre de direction 10 comporte lui-même un tronçon avant 11 muni à son extrémité avant d'une fourche de cardan 12 reliée au reste (non représenté) du mécanisme de direction intégrant l'ensemble 1, et un tronçon arrière 13 à l'extrémité arrière 14 duquel le volant de direction 3 est monté grâce à son moyeu 6, par exemple par vissage.

La colonne de direction 2 comprend en outre un dispositif à engrenages 15 disposé entre les tronçons avant 11 et arrière 13 de l'arbre de direction 10, et un support fixe 16 disposé à l'intérieur du tronçon arrière 13 de l'arbre de direction 10 et à l'arrière duquel le coussin central 4 est fixé grâce à des moyens 17 de montage qui comprennent par exemple des vis traversant des orifices 18 ménagées dans la paroi avant 19 du coussin central 4.

L'ensemble de direction 1 est un ensemble à coussin central 4 fixe qui, grâce au dispositif à engrenages 15 et au support fixe 16, permet de transmettre au tronçon avant 11 de l'arbre de direction 10 un mouvement de rotation du tronçon arrière 13 produit par le volant de direction 3 alors que le coussin central 4 reste fixe.

Plus particulièrement, l'ensemble 1 est semblable à celui décrit dans le document EP-825 089 où de plus amples renseignements pourront être trouvés. Il est à noter que de nombreux autres types d'ensemble de direction à un coussin central fixe sont connus et peuvent être utilisés dans le cadre de l'invention.

Comme on le voit sur la figure 1, l'extrémité arrière de la colonne de direction 1 est masquée par une gaine 22 reliée par son extrémité avant à la planche de bord 23 du véhicule automobile. Le combiné 24 du véhicule automobile est disposé au-dessus de l'extrémité avant de la gaine 22.

La gaine 22 est munie sur chacun de ses côtés latéraux d'une manette 25 de commande séquentielle de la boîte de vitesses du véhicule automobile. Chacune des manettes 25 est articulée par une extrémité avant sur la gaine 22 pour pouvoir pivoter autour d'un axe sensiblement orthogonal à l'axe longitudinal A. L'extrémité arrière de chaque manette 25 est élargie pour permettre son actionnement par l'index, le majeur, l'annulaire ou l'auriculaire d'une main du conducteur saisissant la jante 5, même lorsque cette main a provoqué une rotation relativement importante du volant 3 autour de l'axe longitudinal A par rapport à la position représentée sur la figure 1 qui correspond à un braquage nul.

En particulier, une traction vers l'arrière de la manette 25 droite permet d'engager le rapport de vitesse immédiatement supérieur et une traction de la manette 25 gauche permet d'engager le rapport de vitesse immédiatement inférieur.

Comme illustré par les figures 1 à 4, le coussin central fixe 4 comprend un boîtier 30 de section transversale sensiblement trapézoïdale arrondie et convergeant vers le bas, et dont le fond forme la paroi avant 19 par laquelle le coussin central 4 est relié au support fixe 16.

Ce boîtier 30 contient un module à sac gonflable non représenté. Il est fermé par un couvercle ou volet basculant 31 délimité dans sa paroi arrière 32 et relié à sa paroi supérieure 33 par une charnière. De manière classique, ce volet 31, qui est destiné à basculer pour permettre le déploiement du sac gonflable à l'intérieur de l'habitacle du véhicule, est monté flottant sur le reste du boîtier 30 pour pouvoir se déplacer le long de la direction longitudinale A et actionner un commutateur de commande d'un avertisseur sonore.

Le coussin central 4 comprend en outre une saillie radiale 35 qui entoure le boîtier 30 sur ses deux côtés latéraux et sur son côté inférieur.

Plus précisément, la saillie 35 s'étend le long d'un arc de cercle centré sur l'axe longitudinal A et interrompu sensiblement au niveau de la paroi supérieure 33 du boîtier 30.

La tranche 36 de la saillie 35 comprend un tronçon principal 37, qui appartient sensiblement à un cône centré sur l'axe A et convergeant vers l'arrière, et deux tronçons terminaux 38 aux extrémités supérieures libres 39 de la saillie 35. Les tronçons terminaux 38 de la tranche 36 sont sensiblement parallèles à la paroi supérieure 33 du boîtier 30.

La face avant 40 de la saillie 35 converge vers l'avant et vers l'axe longitudinal A, comme on le voit sur les figures 2 à 4.

La saillie 35 est située axialement en arrière de la paroi avant 19 du boîtier 30 et les branches 7 du volant 3 sont fortement courbées et s'étendent fortement vers l'arrière depuis leurs extrémités 9, à distance du coussin central 4. Ainsi, la distance minimale entre la saillie radiale 35 et l'enveloppe géométrique de révolution, définie par rotation des branches 7 du volant autour de l'axe A et contenant la jante 5, est supérieure à 2 cm et de préférence supérieure à l'épaisseur d'un doigt. Cette enveloppe est représentée en trait mixte sur la figure 2 et désigné par la lettre E.

De préférence, la distance minimale entre la tranche 36 de la saillie 35 et la jante 5 est supérieure à environ 40 mm. Dans ce cas, la distance minimale entre la saillie 35 et l'enveloppe E est atteinte au niveau d'une branche 7. On notera que la figure 2 est une figure schématique où les échelles n'ont pas été respectées.

Par ailleurs, le boîtier 30 a une longueur selon l'axe A d'environ 90 mm, de sorte que sa paroi arrière 32 est fortement espacée de l'interstice 401 (figures 1 et 2), formé entre la paroi avant 19 du coussin central 4 et la paroi arrière de la gaine 22 et dans lequel les extrémités 9 des branches 7 du volant 3 sont reçues.

Le coussin central 4 est muni sur sa saillie radiale 35 d'organes de commande d'équipements fonctionnels du véhicule.

Plus particulièrement, et comme on le voit sur la figure 1, le coussin central 4 comprend trois boutons poussoirs 41, 42 et 43 prévus sur le côté latéral gauche de la face arrière 44 de la saillie 35, et trois boutons poussoirs 45, 46 et 47 prévus sur la même face 44 mais sur le côté latéral droit.

Les boutons 41, 42 et 43 peuvent commander par exemple respectivement l'essuyage du pare-brise et/ou de la vitre arrière par les essuie-glaces, le lavage du pare-brise et/ou de la vitre arrière, et l'activation d'un dispositif de régulation de la vitesse de déplacement du véhicule automobile.

Les boutons 45 et 46 peuvent commander par exemple le fonctionnement d'un autoradio et assurer respectivement la sélection de la source sonore, par exemple radio ou lecteur de disques compacts, et la recherche d'une station de radio par balayage de fréquences. Le bouton 47 peut commander par exemple l'activation d'un ordinateur de bord pour qu'il assure une reconnaissance vocale d'instructions données par le conducteur et reçues via un microphone 48 logé dans la saillie 35, sur son côté inférieur, en avant de sa face arrière 44. Dans ce cas, des fentes 49 sont ménagées dans la face arrière 44 en regard du microphone 48 pour faciliter la réception des ondes acoustiques par le microphone 48.

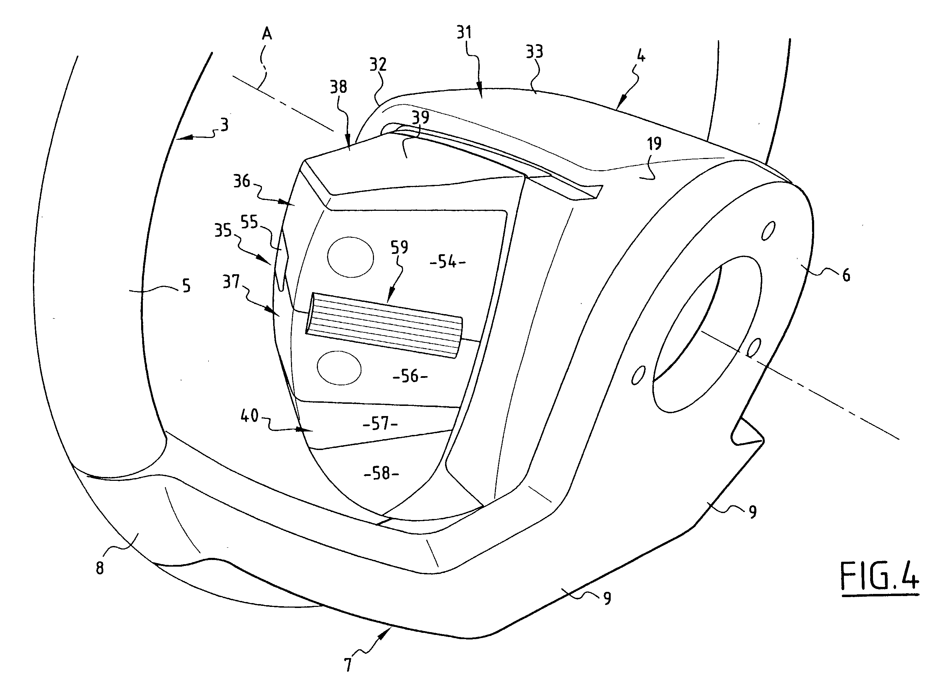

Comme illustré par les figures 1, 3 et 4, le coussin central 4 comporte en outre quatre boutons basculants 50 à 53 sur le côté latéral gauche de la saillie 35, cinq boutons basculant 54 à 58 sur le côté latéral droit de la saillie 35, et une mollette rotative 59 (figure 4) prévue à droite sur la face avant 40 de la saillie 35.

Les boutons 50 à 53, 54 et 56 à 58 sont affleurants dans la tranche 36, dans la face avant 40 et dans la face arrière 44 de la saillie 35. Le bouton 55 n'affleure que dans la tranche 36 et dans la face arrière 44 de la saillie 35. La mollette 59 fait légèrement saillie vers l'avant depuis la face avant 40.

Le bouton 50 est disposé à l'extrémité supérieure 39 gauche de la saillie 35 et s'étend dans les deux coins formés entre la tranche 36 et les faces avant 40 et arrière 44 de la saillie 35. Le bouton 50 est mobile depuis sa position stable de repos représentée sur les figures 1, 3 et 4, autour d'un axe sensiblement parallèle à l'axe longitudinal A, dans deux sens opposés représentés par les flèches 60 et 61 vers des positions actives de commande des feux clignotants du véhicule. Ces deux positions actives sont disposées de part et d'autre de la position de repos. La surface extérieure du bouton 50 est munie de reliefs pour limiter le glissement des doigts du conducteur.

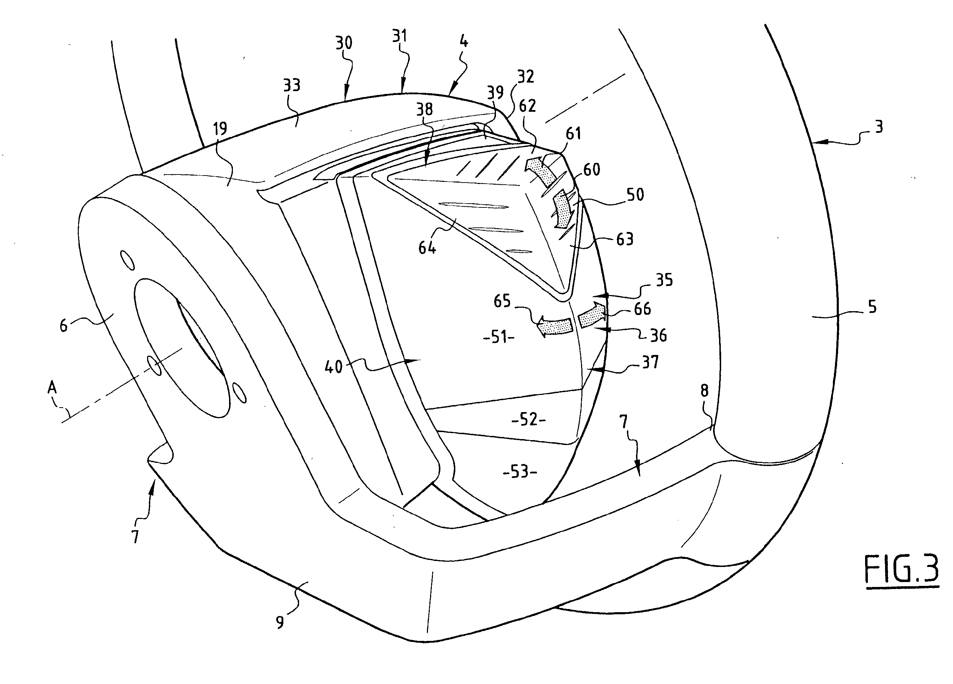

Grâce au profil des branches 7, et à la distance séparant la saillie 35 de l'enveloppe géométrique E, le conducteur peut manoeuvrer le bouton 50 dans le sens 60 dirigé vers le bas, à l'aide de son pouce passant par l'arrière de la jante 5 ou à l'aide de son index et/ou de son majeur passant par l'avant de la jante 5, en prenant appui sur la face supérieure 62 (figure 3) du bouton 50. Le bouton 50 passe alors dans sa première position active de commande et commande l'activation des feux clignotants gauches du véhicule automobile.

Le conducteur peut manoeuvrer le bouton dans le sens opposé 61 dirigé vers le haut, à l'aide de son pouce passant par l'arrière de la jante 5 ou à l'aide de son index et/ou de son majeur passant par l'avant de la jante 5, en prenant appui sur la face latérale gauche 63. Le bouton 50 passe alors dans sa deuxième position active de commande et commande l'activation des feux clignotants droits.

Lorsque le conducteur manoeuvre le bouton 50 dans le sens 60 ou 61 à l'aide de son index ou de son majeur, il peut prendre appui sur la face avant 64 du bouton 50 en plus de la face supérieure 62 ou de la face latérale 63.

La manoeuvre du bouton 50 dans les deux sens 60 et 61 peut être assurée par le pouce et respectivement l'index et/ou le majeur de la main gauche du conducteur placée sur la jante 5 sans qu'il ait besoin de modifier la position de sa main sur le volant. On notera que les deux positions actives de commande du bouton 51 sont des positions stables.

Le bouton 51 entoure sensiblement le bouton 50 et n'affleure que selon une bande étroite dans la face arrière 44 de la saillie 35. Ce bouton 51 peut basculer, depuis sa position stable de repos représentée sur les figures 1, 3, et 4, autour d'un axe sensiblement perpendiculaire à l'axe longitudinal A, dans un premier sens 65 dirigé vers l'avant vers une première position active de commande des blocs optiques du véhicule automobile, et dans un deuxième sens 66 opposé au sens 65 vers une deuxième position active de commande des mêmes blocs optiques. Les deux positions actives de commande sont des positions instables, la commande des blocs optiques se faisant par impulsions.

La manoeuvre du bouton 51 dans le premier sens 65 peut être assurée par le pouce de la main gauche du conducteur prenant appui sur les faces arrière ou latérale du bouton 51, et dans le deuxième sens 66 par l'index ou le majeur de sa main gauche prenant appui sur la face avant du bouton 51 sans qu'il ait besoin de modifier la position de sa main gauche sur le volant 3. Ici encore, la surface extérieure du bouton 50 peut être munie de reliefs limitant le glissement des doigts.

Les boutons 52 et 53 ont une cinématique analogue à celle du bouton 51 sauf que le bouton 52 ne possède qu'une position active de commande atteinte par basculement vers l'avant. Les boutons 52 et 53 commandent respectivement le dispositif de régulation de la vitesse de déplacement du véhicule, et notamment le réglage d'une consigne de vitesse.

Les boutons 54, 56 à 58 ont une cinématique analogue à celle du bouton 51 avec deux positions instables et actives de commande. Le bouton 55 a une cinématique analogue à celle du bouton 52 avec une seule position instable active de commande atteinte par basculement vers l'avant. Les boutons 54 à 58 assurent respectivement la commande de l'augmentation du volume sonore de l'autoradio, de la mise en sourdine de l'autoradio, de la diminution du volume sonore de l'autoradio, la répétition du dernier message sonore émis par l'ordinateur de bord et le réglage du volume sonore d'émission de messages par l'ordinateur de bord.

La mollette 59, qui peut être entraînée en rotation autour de son axe par l'index et/ou le majeur de la main droite du conducteur saisissant la jante 5, permet de sélectionner une station de radio mémorisée ou une plage d'un disque compact.

On constate qu'en raison de la distance séparant la saillie 35 de l'enveloppe de révolution E, le conducteur peut manoeuvrer de manière satisfaisante les différents boutons basculants 50 à 58 dans toutes leurs positions ainsi que la mollette 59, sans être gêné ni pincer ses doigts entre le volant 3 et le coussin central 4. Par ailleurs, la saillie 35 étant reculée axialement de plus de 2,5 cm de la région radialement extérieure de l'interstice 401, et la distance axiale séparant l'interstice 401 de la face arrière 32 du boîtier 30 étant supérieure à 90 mm, les risques qu'un conducteur place un doigt en regard de cet interstice 401 et soit blessé lors du passage d'une branche 7 sont limités.

En outre, les boutons basculants de commande 50 à 58 affleurant dans la saillie 35, les risques d'accrochage intempestifs de ces boutons sont-réduits.

On constate que la disposition des boutons basculant 50 à 58 dans la saillie 35, et notamment du bouton 50 de commande des feux clignotants, est particulièrement ergonomique et permet de regrouper sur le coussin central l'ensemble des organes de commandes habituellement disposés sur la gaine et sur le coussin central uniquement. Ainsi, la gaine 22 peut être équipée de manettes 25 de commande séquentielle de la boîte de vitesses et conserver une longueur acceptable.

## Revendications

1. Ensemble de direction (1) pour véhicule automobile, du type comprenant :
- une colonne de direction (2) comprenant un arbre de direction (10) susceptible de tourner autour d'un axe longitudinal (A),
- un volant de direction (3) comprenant une jante extérieure (5) et au moins une branche (7) reliée par une première extrémité (8) à la jante (5) et par une deuxième extrémité (9) à l'extrémité arrière de l'arbre de direction pour l'entraîner en rotation autour de son axe longitudinal,
- un coussin central fixe, placé sensiblement au centre du volant (3) à l'arrière de la deuxième extrémité (9) de la ou de chaque branche (7) et relié à l'extrémité arrière de la colonne pour être fixe en rotation lorsque l'arbre de direction (10) tourne, le coussin comportant au moins un bouton (50 à 58) de commande d'un équipement du véhicule, le bouton étant affleurant dans le cousin central (4) et mobile par basculement entre une position de repos et au moins une position active de commande, **caractérisé en ce que** le bouton (50, 51) est mobile par basculement dans un premier sens (60, 65) de sa position de repos vers une première position active de commande et, dans un deuxième sens (61, 66) opposé au premier-sens, de sa position de repos vers une deuxième position active de commande, **en ce que** le coussin comprend une saillie radiale (35) sur au moins un de ses côtés latéraux, dans laquelle le bouton (50, 51) affleure, laquelle saillie est suffisamment éloignée d'une enveloppe géométrique de révolution (E) définie par rotation de la ou de chaque branche (7) autour de l'axe longitudinal (A) et contenant la jante (5) pour permettre au bouton (50, 51), dans l'une quelconque de ses positions, d'être poussé dans le premier sens (60, 65) par le pouce d'une main d'un conducteur saisissant un tronçon de la jante et poussé dans le deuxième sens (61, 66) par l'index et/ou le majeur de la même main saisissant le même tronçon de la jante.

2. Ensemble selon la revendication 1, **caractérisé en ce que** le bouton (50) est mobile par basculement autour d'un axe sensiblement parallèle à l'axe longitudinal (A).

3. Ensemble selon la revendication 2, **caractérisé en ce que** la saillie radiale (35) présente au moins une extrémité supérieure libre (39) et **en ce que** le bouton (50) est prévu à cette extrémité.

4. Ensemble selon la revendication 1, **caractérisé en ce que** le bouton (51) est mobile par basculement autour d'un axe sensiblement perpendiculaire à l'axe longitudinal (A).

5. Ensemble selon l'une des revendications précédentes, **caractérisé en ce que** la distance minimale séparant la saillie radiale (35) de ladite enveloppe géométrique (E) est supérieure à environ 2 cm.

6. Coussin central fixe (4) pour un ensemble selon l'une des revendications précédentes, **caractérisé en ce qu'**il comprend une saillie radiale (35) sur au moins un de ses côtés latéraux dans laquelle au moins un bouton (50 à 58) de commande d'un équipement du véhicule affleure, lequel bouton est mobile par basculement dans un premier sens (60, 65) d'une positon de repos vers une première position active de commande et, dans un deuxième sens (61, 66) opposé au premier sens, de sa position de repos vers une deuxième position active de commande.

7. Coussin selon la revendication 6, **caractérisé en ce que** le bouton (50) est mobile par basculement autour d'un axe destiné à être sensiblement parallèle à l'axe longitudinal (A) de l'arbre de direction.

8. Coussin selon la revendication 7, **caractérisé en ce que** la saillie radiale (35) présente une extrémité libre (39) destinée à être orientée vers le haut et **en ce que** le bouton (50) est prévu à cette extrémité.

9. Coussin selon la revendication 6, **caractérisé en ce que** le bouton (51) est mobile par basculement autour d'un axe destiné à être sensiblement perpendiculaire à l'axe longitudinal (A) de l'arbre de direction.

10. Véhicule automobile, **caractérisé en ce qu'**il comprend un ensemble de direction selon l'une des revendications 1 à 5.
